# EUROPEAN PATENT APPLICATION

(11) **EP 4 778 794 A1**
(43) Date of publication of application: **22.07.2026**
(21) Application number: 25152171.2
(22) Date of filing: 16.01.2025
(51) Int. Cl.: B60T 13/66, B01D 53/26, B60T 13/68, B60T 13/70, B60T 17/00, F15B 21/048

(54) **AIR DRYER FOR AN AIR PROCESSING UNIT OF A COMMERCIAL VEHICLE AND METHOD OF OPERATING SAID AIR DRYER**

(71) Applicant: ZF CV Systems Europe BV, 1170 Brüssel (BE)
(72) Inventor: OWSIAK, Kamil, 50-506 Wroclaw (PL)
(74) Representative: Copi, Joachim

(57) **Abstract**

The invention relates to an air dryer (1) for a pneumatic system (2) of a commercial vehicle (3), comprising
an dryer inlet (1a) to be connected to a compressor (4) for receiving compressed air (9) in a supply mode,
an dryer cartridge (16), an overflow charging valve (15), a regeneration valve (22) for connecting said dryer cartridge inlet (16a) to said discharge port (1e) in a regeneration mode,
and a regeneration path (26) extending between said regeneration port (1c) and said dryer cartridge outlet (16b),
wherein a pressure release valve device (12) is provided between said dryer inlet (1a) and said overflow charging valve (15), said pressure release valve device (12) comprising a first position for passing compressed air (9) from a dryer inlet (1a) to said overflow charging valve (15) in said supply mode (I) and a second position for connecting said dryer inlet (1a) to a discharge port (1e) in a feeding line venting mode.

## Description

The invention relates to an air dryer for an air processing unit of a commercial vehicle and a method of operating an air dryer.

Pneumatic systems in commercial vehicles in general comprise a compressor and an air processing unit (APU) with an air dryer for drying and filtering the compressed air supplied by the compressor. The APU further comprises a multi-circuit protection valve device (MCPV) for receiving the dried compressed air and delivering it to consumer circuits of the pneumatic system of the commercial vehicle, for example brake circuits, a suspension circuit, and other applications circuits. In electronic air processing units (EAPU), an electronic control unit (ECU) controls the air processing unit and preferably the compressor. During supply phases, the compressor delivers compressed air via a feeding line to the air dryer, which delivers the dried compressed air to the MCPV. The dryer cartridge of the air dryer generally comprises a desiccant material that absorbs the moisture in the compressed air; therefore, the dryer cartridge must be purged or regenerated in regeneration phases for dehumidification. In the regeneration phases, the dried compressed air from the MCPV is returned through the dryer cartridge via a regeneration path with a purge valve that opens to discharge the humid air through a discharge port of the air treatment unit.

The feeding line between the compressor and the air dryer comprises an overflow charging valve with an opening pressure of e.g. 12 bar and a lower closing pressure of e.g. 5.5 bar. Thus, at the end of a supply phase, compressed air remains in the feeding line at the outlet of the compressor. However, some compressors have problems starting against such an output pressure in the feeding line. In addition, humidity and oil particles of the compressor can remain in the feeding line and impair or block the function of the air dryer, as the feeding line cannot be purged in regeneration mode.

It is therefore an object of the invention to provide an air dryer and a method of operating the air dryer which improve reliability and allows the use of different compressors.

This object is solved by an air dryer and a method of operating the air dryer according to the independent claims. The subclaims describe preferred embodiments. Furthermore, an air processing unit comprising the air dryer, a pneumatic system with the air processing unit and a commercial vehicle are provided.

Thus, a pressure release valve is provided between the dryer inlet and the overflow charging valve. The PRV can be realized as a single valve or as a valve device with several single valves. The PRV comprises two positions, a first position for transferring the compressed air from the dryer inlet to the overflow charging valve, said first position being in particular a basis position. Thus, in the first position of the PRV, the air dryer can be operated in supply mode, where the compressor supplies compressed air to the dryer outlet through the open PRV, the open overflow charging valve, and the dryer cartridge.

In its second position, the PRV connects the dryer inlet, and therefore the feeding line and the compressor outlet, to a feeding line venting path which is connected to the discharge port. Thus, in its second position, the PRV enables a feeding line venting mode in which the feeding line is vented to atmosphere without affecting the other parts of the air dryer and without affecting the system pressure. The inventive feeding line venting mode is preferably different from the regeneration mode where the dryer cartridge is purged by using stored compressed air from the MCPV and the pneumatic system.

The invention offers several advantages. The feeding line venting mode serves as a third mode different from the supply mode and the regeneration mode. Venting the feeding line is possible with high pressure from the compressor to the discharge port, thereby removing moisture and contamination from the feeding line. By venting the supply line, the residual pressure can be quickly reduced without affecting the system pressure. In particular, an additional feeding line venting mode can be added before switching to the supply mode has to start a compressor type that has problems in starting against a relevant pressure at its compressor outlet.

This additional feeding line venting mode can be realized with a little additional hardware. The additional pressure release valve can be realized by a simple pneumatically controlled 3/2 valve, which can be realized in a casing of the air dryer by an additional device, for example a simple piston which is slidably positioned between the dryer inlet and the subsequent overflow charging valve.

The purge valve is preferably closed in the second position of the PRV. The PRV is preferably closed in the regeneration mode to avoid contamination of the feeding line by the purge air from the dryer cartridge.

A further advantage of the invention is a simple design and high functionality, since the purge valve can prevent any air back flow from the feeding line venting path to the regeneration path and the dryer cartridge and therefore, both paths can preferably use the same discharge path, preferably connected to a silencer. The silencer can be provided inside or outside the casing of the air dryer.

According to preferred embodiment, the air dryer comprises a casing, in particular a single casing including the elements of the air dryer. The pressure release valve device can preferably realized by a simple piston slidably provided in the casing, in particular together with the overflow valve, which can be realized by an overflow valve piston.

According to a preferred embodiment, the pressure release valve device is realized as a PRV piston, and the overflow valve is realized as an overflow valve piston, both pistons being slidably provided in a common through or bore in the casing. The PRV piston is preferably hollow and transfers compressed air from the dryer inlet through its interior space to the overflow valve and therefore, the PRV piston does not affect the supply mode in its first position.

According to preferred embodiment, the overflow valve can serve as the pneumatic control or as a part of the pneumatic control of the PRV piston. In the feeding line venting mode, the connecting line between the pressure release valve and the overflow valve is not pressurized and thus, the overflow valve is passive; thus, the overflow valve piston can be used as control port of the PRV piston. According to a preferred embodiment, the PRV piston and the overflow valve piston are slidably provided in through hole, wherein both pistons can contact each other. The pneumatic control signal for switching the PRV piston into its second position preferably acts onto the overflow piston and pushes it against the PRV piston thereby switching the PRV piston into its second position, in which the overflow valve piston is not pressurized and passive. This embodiment enables a simple and compact solution, preferably without additional hardware parts for the pneumatic control of the PRV piston. This arrangement is simple and reliable; the switching states can be customized or adjusted by a return spring of the overflow valve and a return spring or spring load of the pressure release valve thereby guaranteeing safe switching positions.

The inventive method of operating the air dryer enables a cleaning and depressurizing of the feeding line between the compressor outlet and the dryer inlet by using a third mode. Switching the air dryer between the modes can be easily done by an ECU outputting control signals for the modes. According to a preferred embodiment, the ECU only outputs electric signals to the MCPV, and the MCPV subsequently provides pressure signals to the air dryer. Therefore, the MCPV provides the regeneration pressure or purge pressure to the regeneration path, and additionally a PRV pressure signal to the pneumatic control port of the pressure release valve for switching it into its second position. Therefore, no additional elements outside of the MCPV and air dryer are needed for switching the air dryer between its mode.

The inventive method enables the feeding line venting mode as an intermediate mode before switching into the supply mode. Thus, the feeding line can be vented in the feeding line venting mode, and afterwards the pressure release valve can be switched back into its first position. The additional inventive feeding line venting mode preferably serves as an intermediate addition mode before a supply mode.

The invention is hereinafter described in more detail with reference to the appended drawings, in which:
- Fig. 1: is a block diagram of a pneumatic system of a commercial vehicle with an air production unit according to an embodiment of invention;
- Fig. 2: the block diagram of figure 1 together with a cross-sectional view of relevant parts of the air dryer in supply mode before opening the overflow valve;
- Fig. 3: a block diagram and a cross-sectional view corresponding to figure 2, in regeneration mode;
- Fig. 4: a block diagram and a cross-sectional view according to figure 2 and 3, in discharge line venting mode;

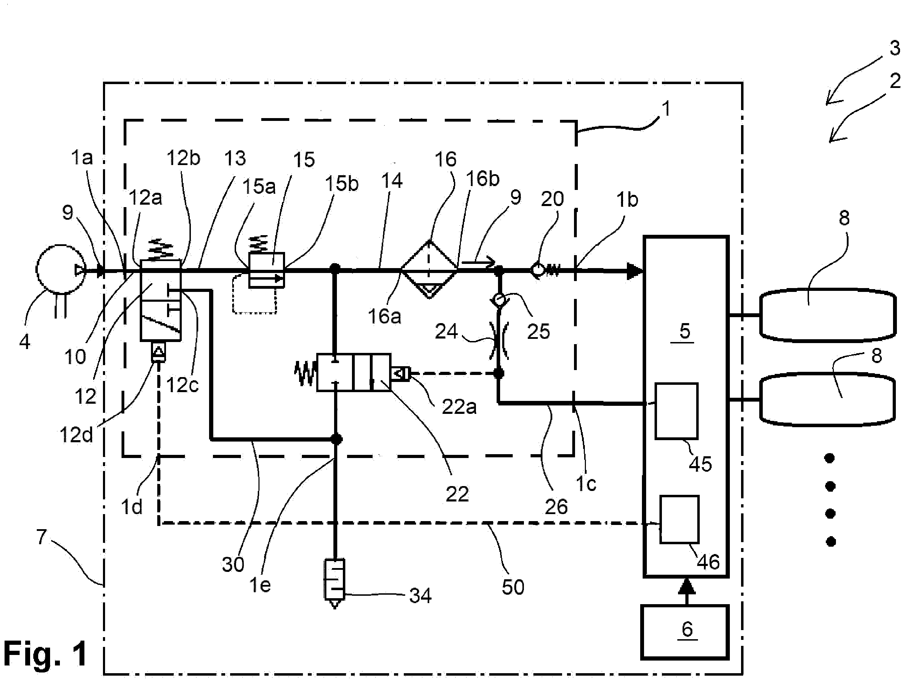

Fig. 1 shows an air dryer 1, indicated by dashed lines, as part of an electrically controlled air processing unit (APU) 7 of a pneumatic system 2 of a commercial vehicle 3. The air processing unit 7 comprises the air dryer 1, a multi-circuit protection valve MCPV 5 and an electronic control unit ECU 6.

The pneumatic system 2 comprises a compressor 4, the air processing unit 7 and consumers circuits 8 connected to the MCPV 5 of the air processing unit 7. A dryer inlet 1a is connected to the compressor 4, and a dryer outlet 1b, a dryer regeneration port 1c and a dryer venting control port 1d are pneumatic ports 1b, 1c, 1d that are connected to the MCPV 5.

The ECU 6 controls the MCPV 5 and preferably the compressor 4, by switching them between several modes or phases, as described below. The compressor 4 supplies compressed air 9 to a feeding line 10 extending through the dryer inlet 1a to a pressure release valve PRV 12 provided in the air dryer 1. In this embodiment, the PRV 12 is realized as a pneumatically controlled 3/2 valve whose pneumatic PRV control port 12d is connected to the pneumatic dryer venting control port 1d of the dryer 1. The dryer control port 1d is controlled by a pneumatic feeding venting signal PRV which is output from a PRV solenoid valve 5.1 in the MCPV 5, wherein PRV solenoid valve 5.1 is controlled by an electric PRV control signal from the ECU 6.

However, in another embodiment the PRV 12 can be realized as an electrically controlled 3/2 valve (solenoid valve) directly controlled by the ECU 6.

In its shown basic position (first position), the PRV 12 transfers the compressed air 9 from the feeding line 10 via a short connecting line 13 to an overflow valve inlet 15a of an overflow valve 15. An overflow valve outlet 15b of the overflow valve 15 is connected to an air dryer line 14, in which a dryer cartridge 16 is provided, wherein a dryer cartridge outlet 16b of the dryer cartridge 16 is connected to the dryer outlet 1b via a spring-loaded check valve 20.

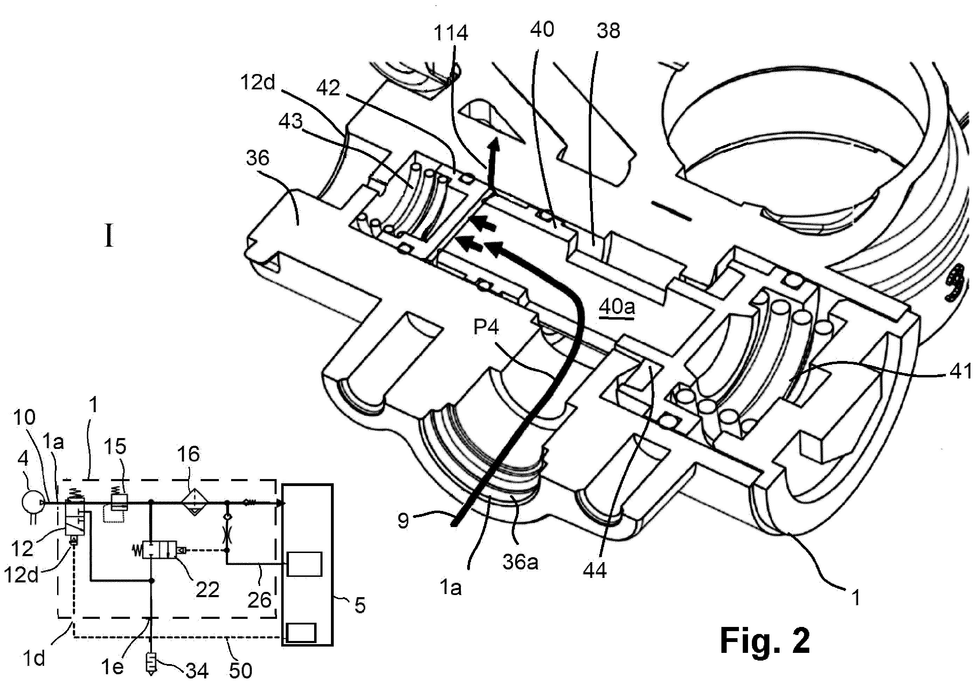

Figures 1 and 2 show the supply mode I which is the basic mode of the air dryer 1 and the APU 7; in the supply mode I the compressed air 9 is pumped by the compressor 4 through the dryer inlet 1a, the feeding line 10 and the open PRV 12 to the overflow valve inlet 15a. The overflow valve 15 opens at an opening pressure OP of e.g. OP =12 bar at its overflow valve inlet 15a and closes at a closing pressure CP of e.g. CP= 5.5 bar. In Fig. 2, the overflow valve 15 is still closed and will open and transfer the compressed air 9 to the dryer cartridge 16 for drying. The dried compressed air 9 then flows through the spring-loaded check valve 20 out of the dryer outlet 1b to the MCPV 5, where the compressed air 9 is distributed to the consumer circuits 8. The dryer cartridge 16 comprises a desiccant gel which absorbs the moisture in the compressed air 9.

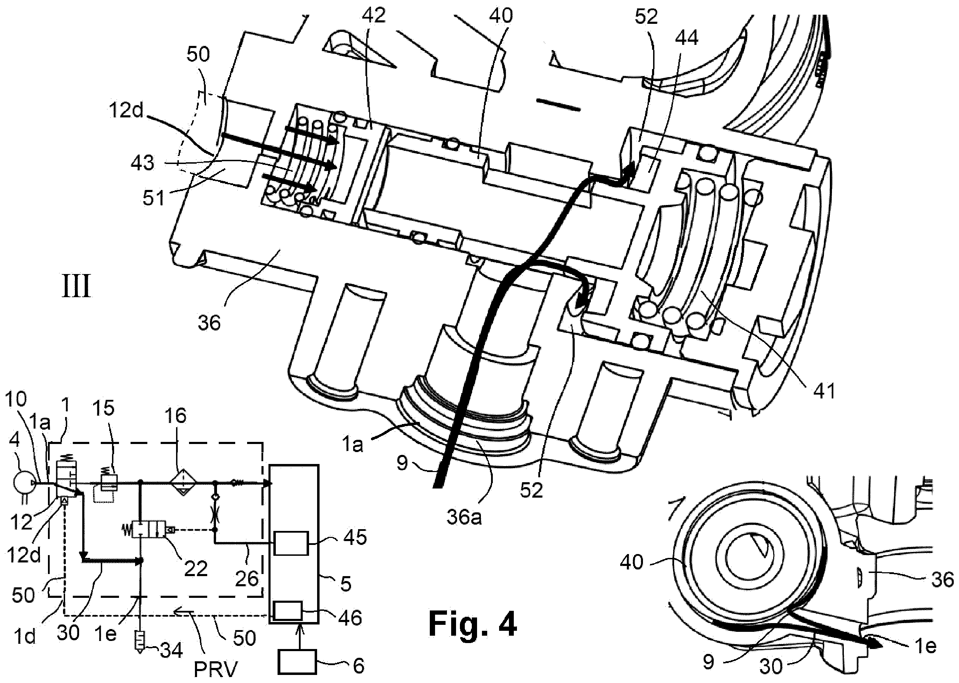

The air dryer 1 further comprises a regeneration path 26 extending between the dryer regeneration port 1c and the cartridge outlet 16b. In the regeneration path 26, a throttle 24 and a regeneration check valve 25 are provided. The regeneration path 26 controls the control port 22a of a spring loaded 2/2 purge valve 22 connecting the dryer cartridge inlet 16a to a discharge port 1e of the air dryer 1. In the supply mode of Fig. 1 and 2, the regeneration path 26 is depressurized and therefore, the purge valve 22 is closed. The dryer regeneration port 1c is connected to a regeneration control valve 45 of the MCPV 5. The air dryer 1 further comprises a feeding line venting path 30 between a third pneumatic port 12c of the PRV 12 and the discharge port 1e as explained below with respect to Fig. 4. In the supply mode I of Fig. 1 and 2, the regeneration path 26 is closed by the purge valve 22, and the feeding line inventing path 30 is closed by the PRV 12. A silencer 34 is connected to the discharge port 1e.

Figure 2 shows the pneumatic block diagram of figure 1 together with a cross-sectional view of a relevant part of the air dryer 1 in the supply mode I. The air dryer 1 is preferably realized with one single casing 36 made of metal. The casing 36 comprises a feeding inlet 36a which corresponds to the dryer inlet 1a, for receiving the compressed air 9. The casing 36 further comprises a through hole 38 connected to the feeding inlet 36a. In the through hole 38, a PRV piston 40 and an overflow valve piston 42 are slidably provided and abut each other. The overflow valve piston 42 is spring loaded by an OVP spring 43, thereby biasing the overflow valve piston 42 against the PRV piston 40. The PRV piston 40 is spring loaded by a PRV spring 41. Further air paths and air lines merging into the through hole 38 extend out of the sectional plane of figure 2.

In the supply mode I of figure 2, the compressed air 9 enters the casing 36 through the feeding inlet 36a and flows into a piston interior 40a of the PRV piston 40, which is open on its left side in figure 2. The compressed air 9 therefore pushes the overflow valve piston 42 against the spring force of the OVP spring 43; in figure 2, the piston 42 is not yet pushed. When the inlet pressure P4 provided by the compressor 4 reaches the upper threshold Pup of 12 bar, the inlet pressure P4 overcomes the spring force of the overflow valve spring 43 and pushes the overflow piston 42 to the left, thereby opening an air passage extending vertically to the depicted sectional plane. Thus, the compressed air 9 flows through the open overflow valve 15 along the arrow 114 to the dryer cartridge 16 provided above the depicted sectional plane. The PRV spring 41 presses a sealing 44 of the PRV piston 40 against the casing 36, thereby closing passages provided between the PRV piston 40 and the casing 36.

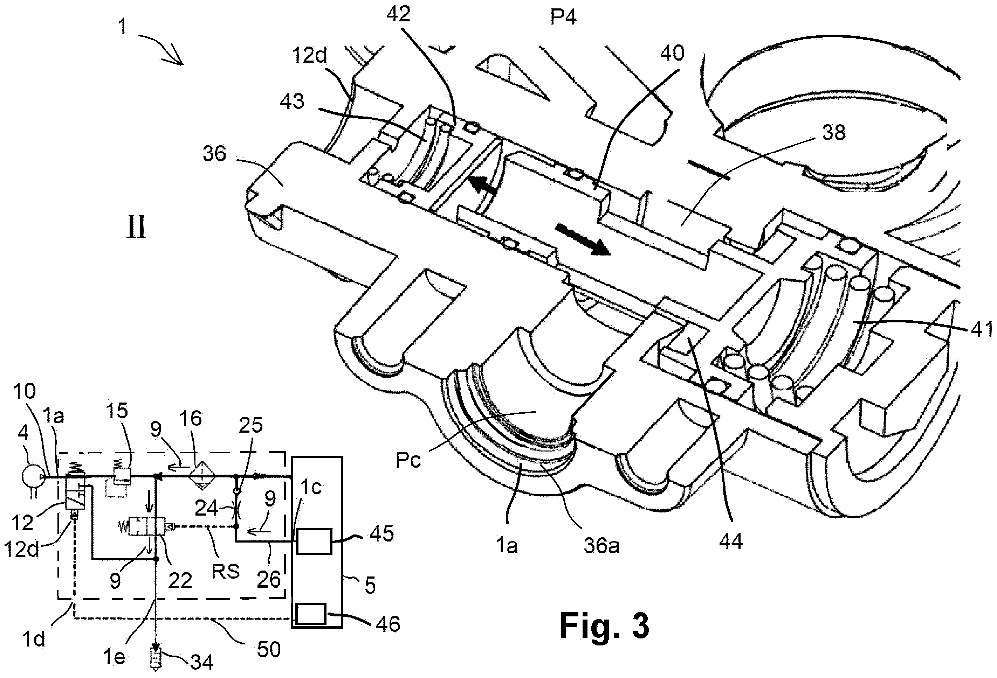

Figure 3 shows the regeneration mode II, which is initiated by the solenoid regeneration control valve 45 in the MCPV 5. In the regeneration mode II, the regeneration path 26 is pressurized, thereby outputting a regeneration signal RS to the pneumatic control port 22a of the purge valve 22 and switching the purge valve 22 into its open position. The dried compressed air 9 from the MCPV 5 flows through the throttle 24, thereby reducing the pressure and the air flow speed of the compressed air 9, and via the regeneration check valve 25 to the air dryer line 14, then through the dryer cartridge 16 and the open purge valve 22 and through the discharge port 1e of the air dryer 1 to the silencer 34. The silencer 34 can be provided in the air dryer 1 or outside. The compressor 4 is switched off, which can be a complete switch-off or a switching into an idle state. The overflow valve 15 is thus closed.

During regeneration a pressure drop is observed in the feeding line 10 down to the closing pressure of Pc=5.5 bar, which thus remains and is secured in the feeding line 10. If the next supply mode I is started immediately after the regeneration mode II, then the compressor 4 has to start against the closing pressure Pc= 5.5 bar in the feeding line 10.

In figure 2, the closing pressure Pc of 5.5 bar from the feeding line 10 at the feeding inlet 36a does not affect the PRV piston 40 because the spring force F41 of the PRV spring 41 is about 340 N. The system pressure P4 of 12 bar applied to the PRV piston 40 is about 268 N and therefore does not overcome the spring force F41. The overflow valve 15 corresponding to the overflow valve piston 42 is closed.

Figure 4 shows the feeding line venting mode III, which is initiated by a venting signal PRV from the MCPV 5. For this reason, a solenoid- PRV control valve 46 can be provided in the MCPV 5; thus, the ECU 6 switches the PRV control valve 46, which pressurizes a venting control line 50 to the PRV control port 12d of the PRV 12 and switches the PRV 12 to its actuated position of figure 4. Compressed air 9 stored in the feeding line 10 flows through the PRV 12 into the feeding line venting path 30 and to the discharge port 1e, and through the silencer 34 to atmosphere. In this situation, the feeding line 10 is vented and the residual pressure in the feeding line 10 between the compressor 4 and the PRV 12 drops down. The purge valve 22 is closed as the regeneration path 26 is not pressurized, thereby preventing air flow to the dryer cartridge 16. According to a modified embodiment, the PRV 12 can comprise a solenoid to be switched directly by the ECU 6 rather than by the pneumatic signal PRV in a pneumatic venting control line 50.

As can been seen from figure 4, in the feeding line venting mode III the compressed air 9 from the feeding line 10 enters the casing 36 via the feeding inlet 36a. The overflow valve piston 42 acts as the pneumatic PRV control 12d of the PRV 12; the venting control line 50 is indicated by dashed lines and is connected to an opening 51 in the casing 36 so that the compressed air serving as venting signal PRV acts on the overflow piston 42 and pushes the overflow valve piston 42 to the right, against the PRV piston 40. Subsequently, the pneumatic pressure of the venting signal PRV pushes the overflow valve piston 42 and the PRV piston 40 together to the right with a force of about 426 N, against the spring force of the PRV spring 41, which is only about 340N. This causes the PRV piston 40 to move to the right, thereby opening passages 52 between the PRV piston 40 and the casing 36. As can been seen from the sectional view at the bottom right of Fig. 4, the compressed air 9 flows in the passage 52 in circumferential direction around the PRV piston 40 to the feeding line venting path 30 and to the discharged port 1e.

This mechanical displacement of the overflow valve piston 42 does not cause the overflow valve 15 to open, since the overflow valve piston 42 pushes the PRV piston 40 to the right, thus keeping the air passages to the dryer 16 closed, as shown in figure 2. The overflow valve piston 42 services only as pneumatic PRV control 12d for activating the pressure release valve 12. The overflow valve piston 42 therefore abuts the PRV piston 40 and pushes it against the PRV spring 41.

### List of reference numerals (part of the description)

- 1: air dryer
- 1a: air dryer inlet
- 1b: air dryer outlet
- 1c: regeneration port
- 1d: PRV control port
- 1e: discharge port
- 2: pneumatic system
- 3: commercial vehicle
- 4: compressor
- 5: multi-circuit protection valve MCPV
- 6: electronic control unit
- 8: consumers circuits
- 9: compressed air
- 10: feeding line
- 12: pressure release valve
- 12a: first pneumatic PRV port, PRV inlet port
- 12b: second pneumatic PRV port, PRV outlet port
- 12c: third pneumatic PRV port, PRV release port
- 12d: pneumatic PRV control port
- 13: connecting line
- 14: air dryer line
- 15: overflow valve
- 15a: inlet of the overflow valve
- 16: air dryer cartridge
- 16a: air dryer cartridge inlet
- 16b: air dryer cartridge outlet of the MCPV
- 20: spring loaded check valve
- 22: purge valve
- 22a: pneumatic control port of the purge valve 22
- 24: throttle
- 25: regeneration check valve
- 26: regeneration path
- 30: feeding line venting path
- 34: silencer
- 36: casing
- 36a: feeding inlet
- 38: through hole in the casing 36
- 40: PRV piston
- 40a: piston interior space of the PRV piston 40
- 41: PRV spring
- 42: overflow valve piston
- 43: overflow valve spring
- 44: sealing
- 45: regeneration control valve
- 46: PRV control valve
- 50: venting control path
- 52: opening passages
- 114: arrow

- P4: inlet pressure
- RS: regeneration signal
- PRV: venting signal

- I: supply mode, in Fig. 1, 2
- II: regeneration mode, in Fig. 3
- III: feeding line venting mode, in Fig. 4

## Claims

1. An air dryer (1) for an air processing unit (7) of a pneumatic system (2) of a commercial vehicle (3), said air dryer (1) comprising
a dryer inlet (1a) to be connected to a compressor (4) for receiving compressed air (9) in a supply mode (I),
a dryer cartridge (16) with a dryer cartridge inlet (16a), a dryer cartridge outlet (16b), a regeneration port (1c), and a discharge port (1e),
an overflow charging valve (15) provided in an air dryer line (14) between said dryer cartridge inlet (16a) and said dryer inlet (1a),
a purge valve (22) for connecting said dryer cartridge inlet (16a) to said discharge port (1e) in a regeneration mode (II),
a regeneration path (26) extending between said regeneration port (1c) and said dryer cartridge outlet (16b),
**characterized in that**
a pressure release valve device (12) is provided between said dryer inlet (1a) and said overflow charging valve (15), said pressure release valve device (12) comprising a first position for passing compressed air (9) from said dryer inlet (1a) to said overflow charging valve (15) in said supply mode (I) and a second position for connecting said dryer inlet (1a) to said discharge port (1e) of said air dryer (1) in a feeding line venting mode (III).

2. The air dryer (1) according to claim 1, wherein said pressure release valve device (12) comprises a pneumatic inlet port (12a) connected to said dryer inlet (1a), a pneumatic outlet port (12b) connected to said overflow valve (15), a third pneumatic port (12c) connected to said discharge port (1e), and a PRV control port (12d) for being switched by a PRV control signal (PUV) between said first position and said second position,
said PRV control port (12d) being pneumatically controlled or electrically controlled.

3. The air dryer (1) according to one of the preceding claims, wherein said pressure release valve device (12) is a 3/2 valve, which is spring loaded into its first position as a basic position.

4. The air dryer (1) according to one of the preceding claims, wherein in said second position of said pressure release valve (12) said dryer inlet (1a) is separated from said overflow charging valve (15).

5. The air dryer (1) according to one of the preceding claims, wherein said air dryer (1) further comprises one more of the following elements:
a spring loaded outlet check valve (20) provided between said dryer cartridge outlet (16b) and said dryer outlet (1b),
a throttle (24) provided in said regeneration path (26),
a regeneration check valve (25) provided in said regeneration path (26).

6. The air dryer (1) according to one of the preceding claims, wherein said purge valve (22) is spring loaded into its closed position and pressure controlled by said regeneration path (26), for opening when pressurizing said regeneration path (26) and for connecting said air dryer line (14) between said overflow charging valve (15) and said dryer cartridge (16) to said discharge port (1e) or another discharge port of said air dryer (1).

7. The air dryer (1) according to one of the preceding claims, wherein said overflow charging valve (15) is configured to open at an opening pressure on its overflow charging valve inlet (15a) and to close at a closing pressure at its overflow charging valve inlet (15a), said opening pressure being higher than said closing pressure, e.g. with an opening pressure of 12 bar and a closing pressure of 5.5 bar.

8. The air dryer (1) according to one of the preceding claims, said air dryer (1) comprising
a casing (36) with a through hole (38),
a feeding inlet (36a) constituting said dryer inlet (1a),
wherein said overflow valve (15) comprises an overflow valve piston (42) which is slidably provided in said through hole (38),
wherein said pressure release valve (12) comprises a pressure release valve piston (40) which is slidably provided in said through hole (38), and
a pneumatic control port (1d) connected to a pneumatic PRV control port (12d) of said pressure release valve (12),
wherein said pneumatic PRV control port (12d) being connected to said overflow valve piston (42), said overflow valve piston (42) being pushable by a pneumatic control signal (PRV) in said PRV control port (12d), thereby pushing said pressure release valve piston (40) against its spring load into said second position.

9. The air dryer (1) according to claim 8, wherein said pressure release valve piston (40) is hollow with a piston interior space (40a), wherein in said first position of said pressure release valve (12) said feeding inlet (36a) is connected to said air dryer line (14) through said piston interior space (40a), and wherein in said second position of said pressure release valve (12) said overflow piston (42) and said pressure release valve piston (40) are contacting each other and are displaced in said through hole (38) thereby closing said connection of said feeding inlet (36a) to said air dryer line (14).

10. The air dryer (1) according to claim 8 or 9, wherein said overflow valve piston (42) serves as pneumatic control of said pressure release valve piston (40).

11. An air processing unit (7) comprising
an air dryer (1) according to one of the previous claims,
a multi-circuit protection valve (5) being connected to said dryer outlet (1b), to said regeneration port (1c), and to said pressure release valve control port (1d) of said air dryer (1), and
an electronic control unit (6), said electronic control unit (6) being configured to output control signals to said multi-circuit protection valve (5) for switching said air dryer (1) between said supply mode, said regeneration mode (II), and said feeding line venting mode (III).

12. Pneumatic system (2) for a commercial vehicle (3), said pneumatic system (2) comprising
an air processing unit (7) according to claim 11,
a compressor (4) being connected to said dryer inlet (1) of said air dryer (1) for supplying compressed air (9) in said supply mode (I), and
consumer circuits (8) connected to said multi-circuit protection valve (5).

13. Commercial vehicle (3) comprising a pneumatic system (2) according to claim 12.

14. Method of operating an air dryer (1) according to one of claims 1 to 10, said method comprising the steps
- operating said air dryer (1) in said supply mode (I), in which
said pressure release valve (12) is in its first position and said purge valve (22) is in its closed position, wherein in said supply mode (I) said compressor (4) supplies compressed air (9) into said dryer inlet (1a) and through a feeding line (10), said pressure release valve (12), said overflow charging valve (15) and said dryer (16) to said dryer outlet (1b),
- operating said air dryer (1) in said regeneration mode (II), in which said pressure release valve (12) is in its first position, wherein in said regeneration mode (II) dried compressed air (9) is passed to said regeneration path (26), thereby switching said purge valve (22) into its open position and purging said dryer cartridge (16) by a regeneration air flow through said regeneration path (26), said dryer cartridge (16) and said purge valve (22) to a discharge port (1e),
- operating said air dryer (1) in said feeding line venting mode (III), in which said purge valve (22) is in its closed position, wherein in said feeding line venting mode (III) said pressure release valve (12) is switched into its second position and said feeding line (10) is vented through said pressure release valve (12) and said feeding line venting path (30) to said discharge port (1e).

15. Method of operating an air dryer (1) according to claim 14, wherein said pressure release valve (12) is pneumatically controlled and switched by a pneumatic venting signal (PRV), in particular a a pneumatic venting signal (PRV) from a multi-circuit protection valve (5).
